# DEMANDE DE BREVET EUROPEEN

(11) **EP 1 596 050 A1**
(43) Date de publication de la demande: **16.11.2005**
(21) Numéro de dépôt: 05300339.8
(22) Date de dépôt: 29.04.2005
(51) Int. Cl.: F02B 23/10, F01L 3/20

(54) **Moteur à combustion muni d'un piston concave cooperant avec une surface de chasse convexe de la culasse**

(30) Priorité: 14.05.2004 FR 0405230
(71) Demandeur: Renault s.a.s., 92100 Boulogne Billancourt (FR)
(72) Inventeur: Sakushima, Nobuyuki, 92120, Montrouge (FR); Argueyrolles, Bruno, 91610, Ballancourt (FR); Lahjaily, Hamid, 91410, Dourdan (FR)

(57) **Abrégé**

L'invention concerne un moteur à combustion interne à injection directe de véhicule automobile comportant un cylindre (10) coiffé d'une culasse (18) dans lequel un piston (16) est monté coulissant axialement entre une position basse et une position haute dans laquelle la face supérieure (24) du piston (16) est adjacente à la face inférieure (20) de la culasse (18), et comportant une cavité centrale de combustion (44), du type dans lequel la face inférieure (20) de la culasse (18) comporte une surface annulaire (52) de chasse qui est destinée à coopérer avec une zone (48) périphérique annulaire de la face supérieure (24) du piston (16) qui entoure la cavité centrale (44) pour chasser radialement les gaz admis vers la cavité centrale de combustion (44) lorsque le piston (16) se déplace vers sa position haute, caractérisé en ce que la cavité centrale (44) est réalisée dans la face supérieure (24) du piston (16), et en ce que la zone périphérique (48) du piston (16) est tronconique concave et la surface de chasse (52) de la culasse (18) tronconique convexe.

## Description

L'invention concerne un moteur à combustion interne à injection directe de véhicule automobile.

L'invention concerne plus particulièrement un moteur à combustion interne à injection directe de véhicule automobile comportant au moins un cylindre qui est coiffé d'une culasse supérieure et dans lequel un piston est monté coulissant axialement entre une position basse et une position haute dans laquelle la face supérieure du piston est adjacente à la face inférieure de la culasse, et comportant une chambre de combustion qui est délimitée latéralement par la paroi du cylindre et axialement vers le bas par la face supérieure du piston et vers le haut par la face inférieure de la culasse, du type dans lequel la chambre de combustion comporte une cavité centrale de combustion qui est destinée à recevoir un mélange de gaz admis et de carburant, et du type dans lequel la face inférieure de la culasse comporte une surface annulaire dite de chasse qui est destinée à coopérer avec la périphérie annulaire tronconique de la face supérieure du piston qui entoure la cavité centrale afin que les gaz admis, qui sont situés entre la périphérie de la face du piston et la surface annulaire de chasse, soient chassés radialement vers la cavité centrale de combustion lorsque le piston se déplace vers sa position haute.

Dans les moteurs à combustion interne à injection directe, notamment les moteurs Diesel, des gaz d'admission, et notamment de l'air, sont admis dans la chambre de combustion par l'intermédiaire d'au moins un orifice d'admission, et du carburant est injecté directement dans la chambre de combustion par l'intermédiaire d'un injecteur. Ainsi, le mélange des gaz d'admission et du carburant s'effectue à l'intérieur de la chambre de combustion avant la phase de combustion.

Afin d'optimiser la consommation de carburant, il est nécessaire de rendre homogène le mélange d'air et de carburant.

En effet, lorsque le mélange est parfaitement homogène, le carburant brûle en totalité lors de la phase de combustion. Dans ces conditions, la quantité de substances polluantes produite par la combustion du mélange est minimisée.

Il est connu de favoriser le mélange de l'air et du carburant en conférant au mélange un mouvement aérodynamique. Le phénomène dit de « chasse » participe à la création de ce mouvement aérodynamique.

Ce phénomène est notamment décrit dans le document JP-A-2002.004863.

Ce document décrit et représente un moteur dans lequel la chambre de combustion comporte une cavité centrale de combustion qui est réalisée dans la face inférieure de la culasse supérieure.

La périphérie annulaire de la face supérieure du piston a une forme globalement tronconique convexe. La face inférieure de la culasse comporte une surface annulaire dite de chasse de forme complémentaire de la périphérie annulaire du piston, c'est-à-dire que la surface de chasse a une forme globalement tronconique concave.

En position haute du piston, la périphérie annulaire du piston est adjacente à la surface annulaire de chasse de la culasse.

Le phénomène de chasse se produit lorsque le piston coulisse depuis sa position basse vers sa position haute en comprimant le mélange contenu dans la chambre de combustion contre la face inférieure de la culasse. Ainsi, lors du coulissement ascendant du piston, l'air qui est situé axialement entre la périphérie annulaire du piston et la surface de chasse est chassé radialement vers l'intérieur de la cavité de combustion, c'est-à-dire vers l'axe vertical du cylindre et vers le haut.

Ce mouvement des gaz admis provoque des turbulences qui sont favorables au mélange de l'air et du carburant.

L'invention propose un moteur perfectionné permettant d'amplifier le mouvement aérodynamique produit par ce phénomène afin de rendre encore plus homogène le mélange d'air et de carburant.

A cet effet, l'invention propose un moteur du type décrit précédemment, caractérisé en ce que la cavité centrale de combustion est réalisée dans la face supérieure du piston, et en ce que la zone périphérique de la face supérieure du piston est tronconique concave de manière à être inclinée vers la cavité centrale de combustion, et en ce que la surface de chasse de la culasse a une forme tronconique convexe complémentaire de la zone périphérique du piston.

Selon d'autres caractéristiques du moteur :
- le moteur comporte au moins un conduit qui débouche dans la chambre de combustion par l'intermédiaire d'un orifice réalisé dans la surface de chasse qui est obturé par une soupape;
- la face inférieure de la tête de la soupape est coplanaire à la surface de chasse ;
- la soupape comportant une queue de soupape, l'axe de la queue de soupape n'est pas perpendiculaire à la face inférieure de la soupape, et le moteur comporte des moyens de blocage en rotation de la queue de soupape autour de son axe par rapport à la culasse ;
- l'axe de la queue de la soupape s'étend axialement vers le haut ;
- la cavité centrale de combustion est délimitée radialement par le contour interne de la périphérie annulaire de la face supérieure du piston ;
- l'orifice est un orifice d'admission des gaz ;
- l'orifice est un orifice d'échappement des gaz brûlés.

D'autres caractéristiques et avantages de l'invention apparaîtront au cours de la lecture de la description détaillée qui va suivre pour la compréhension de laquelle on se reportera aux dessins annexés, parmi lesquels :
- la figure 1 est une vue en coupe axiale qui représente schématiquement un cylindre de moteur à combustion réalisé selon l'invention dans lequel coulisse un piston, le piston étant représenté à proximité de sa position haute dans laquelle la périphérie de sa face supérieure coopère avec une surface de chasse de la culasse afin de produire le phénomène de chasse ;
- la figure 2 est une vue similaire à celle de la figure 1 qui représente une variante de réalisation de l'invention dans laquelle la queue de soupape n'est pas orthogonale à la face inférieure de la soupape.

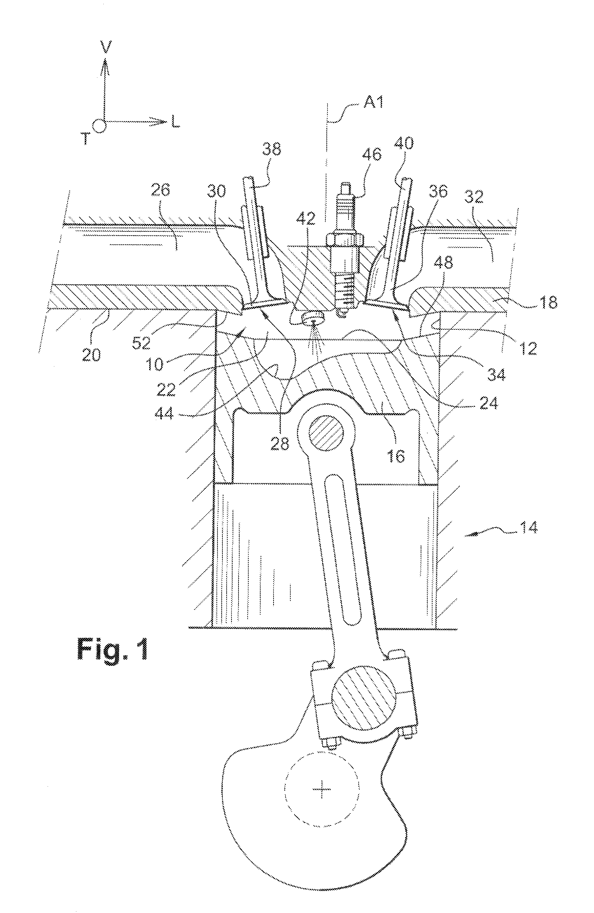

Dans la suite de la description, on adoptera de manière non limitative une orientation longitudinale, verticale et transversale indiquée par le trièdre L, V, T de la figure 1.

Des éléments identiques, similaires ou analogues seront identifiés par les mêmes numéros de référence dans la suite de la description.

La description est faite en référence à un moteur Diesel à injection directe, cependant elle n'est pas limitative. L'invention peut s'appliquer à différents types de moteurs tels qu'un moteur à essence à injection directe.

On a représenté à la figure 1 un cylindre 10 qui est réalisé sous la forme d'un alésage 12 cylindrique d'axe vertical A1 aménagé dans un bloc-moteur 14. Un piston 16 est animé d'un mouvement alternatif axial dans l'alésage 12 et il délimite vers le bas le volume du cylindre 10. Le bloc-moteur 14 est recouvert d'une culasse 18 dont une face inférieure 20 horizontale délimite le cylindre 10 vers le haut.

Une chambre de combustion 22 est délimitée latéralement par la paroi 12 du cylindre 10 et axialement vers le bas par la face supérieure 24 du piston 16 et vers le haut par la face inférieure 20 de la culasse supérieure 18.

Le piston 16 est monté coulissant verticalement entre une position basse dans laquelle la chambre de combustion 22 a un volume maximal, et une position haute dans laquelle la face supérieure 24 du piston 16 est sensiblement adjacente à la face inférieure 20 de la culasse 18, la chambre de combustion 22 ayant alors un volume minimal.

La culasse 18 du moteur comporte au moins un conduit 26 d'admission des gaz, notamment d'air, dans le cylindre 10.

Le conduit d'admission 26 débouche dans la chambre de combustion 22 par un orifice d'admission 28 qui s'ouvre dans la face inférieure 20 de la culasse 18. L'orifice d'admission 28 est ici excentré par rapport à l'axe A1 du cylindre 10. L'orifice d'admission 28 est obturé par une soupape d'admission 30.

Par ailleurs, la culasse 18 comporte au moins un conduit d'échappement 32 des gaz brûlés qui s'ouvre par un orifice d'échappement 34 dans la face inférieure 20 de la culasse 18. L'orifice d'échappement 34 du conduit d'échappement 32 est aussi obturé par une soupape d'échappement 36 associée.

La soupape d'admission 30 et la soupape d'échappement 36 comportent chacune une queue de soupape 38, 40 qui s'étend vers le haut de manière sensiblement verticale dans le conduit d'admission 26 ou d'échappement 32 et traverse sa paroi. Les soupapes 30, 36 sont chacune commandées entre une position d'obturation et une position d'ouverture par coulissement selon une direction sensiblement parallèle à celle de l'axe A2 de leur queue de soupape 38, 40 associée.

S'agissant d'un moteur à injection directe, le cylindre 10 comporte aussi un injecteur de carburant dont le nez 42 débouche directement dans la chambre 22 à travers la face inférieure 20 de la culasse 18.

Selon les enseignements de l'invention, comme illustré à la figure 1, le piston 16 comporte, dans sa face supérieure 24, une cavité concave centrale de combustion 44, aussi appelée bol, qui, en vue de dessus, présente un contour sensiblement circulaire.

Lorsque le piston 16 est en position haute, le volume de la chambre de combustion 22 se confond sensiblement avec le volume de la cavité de combustion 44.

L'injecteur 42 est agencé de telle sorte que l'axe principal d'injection de carburant par l'injecteur 42 soit orienté en direction de la cavité 44. Ainsi, la cavité de combustion 44 est destinée à recevoir un mélange de gaz admis et de carburant.

Le cylindre 10 comporte une bougie d'allumage 46 à étincelles, qui est agencée dans la face inférieure 20 de la culasse 18 au droit de la cavité centrale de combustion 44. Elle est ici agencée sensiblement selon l'axe A1 du cylindre 10.

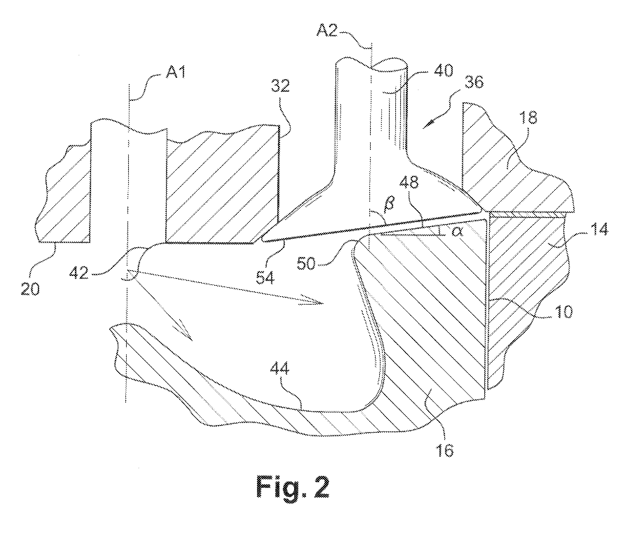

La face supérieure 24 du piston 16 comporte une zone périphérique annulaire 48 qui entoure la cavité centrale de combustion 44. La zone périphérique 48 a une forme tronconique convexe. Ainsi, comme représenté à la figure 2, en coupe axiale du piston 16, la zone périphérique 48 présente une pente qui décline radialement en se rapprochant de l'axe A1 du cylindre 10.

La pente radiale de la zone périphérique 48 est inclinée selon un angle α, par exemple compris entre 5° et 20°, par rapport à un plan horizontal.

La zone périphérique 48 est ici délimitée radialement vers l'extérieur par la paroi 12 du cylindre 10 et vers l'intérieur par le contour 50 de la cavité de combustion 44. Ainsi, la cavité centrale de combustion 44 est délimitée radialement par le contour interne 50 de la zone périphérique annulaire 48 du piston 16.

La face inférieure 20 de la culasse 18 présente une surface 52 annulaire tronconique convexe de forme complémentaire de celle de la zone périphérique 48. Cette surface annulaire sera appelée par la suite surface de chasse.

La surface de chasse 52 est agencée verticalement au droit de la zone périphérique 48 de façon que, lorsque le piston 16 est en position haute, la zone périphérique 48 soit sensiblement adjacente à la surface de chasse 52.

Selon un premier mode de réalisation de l'invention qui est représenté à la figure 1, les orifices d'admission 28 et d'échappement 34 sont réalisés dans la face inférieure 20 de la culasse 18, au droit de la cavité de combustion 44 du piston 16, c'est-à-dire que la surface de chasse 52 ne comporte pas d'orifice.

Lors de la phase d'admission, la soupape d'admission 30 est commandée vers sa position d'ouverture et la soupape d'échappement 36 est en position d'obturation. Le piston 16 est animé d'un mouvement descendant vers sa position basse de façon à aspirer des gaz d'admission dans la chambre de combustion 22.

Lors de la phase suivante de compression, la soupape d'admission 30 est commandée en position d'obturation et le piston 16 est animé d'un mouvement ascendant depuis sa position basse vers sa position haute. Durant ce mouvement ascendant du piston 16, du carburant est injecté dans la cavité de combustion 44 par l'intermédiaire de l'injecteur 42.

Vers la fin du mouvement ascendant, lorsque la zone périphérique 48 du piston 16 se rapproche sensiblement de la surface de chasse 52, les fluides, c'est-à-dire des gaz admis et éventuellement du carburant, qui sont compris verticalement entre la zone périphérique 48 et la surface de chasse 52, sont chassés selon une direction centripète vers l'axe A1 du cylindre 10 et vers le bas, à l'intérieur de la cavité de combustion 44. Les fluides sont chassés selon la direction radiale inclinée de la pente descendante de la zone périphérique 48

Les fluides chassés dans la cavité de combustion 44 créent un mouvement de convection qui brasse le mélange de gaz et de carburant contenu dans la cavité de combustion 44. Le mouvement de convection provoque un courant descendant à proximité du contour 50 de la cavité de combustion 44 et un courant ascendant à proximité de l'axe vertical A1 du cylindre 10.

Ce mouvement permet d'obtenir un mélange homogène de gaz admis et de carburant. De plus, le courant ascendant le long de l'axe A1 du cylindre 10 permet de propulser le mélange vers la face inférieure 20 de la culasse 18, et plus particulièrement vers la bougie 46 de manière à favoriser l'allumage du mélange.

Selon un second mode de réalisation représenté à la figure 2, les orifices d'admission 28 et/ou d'échappement 34 s'ouvrent dans la surface de chasse 52 de la culasse 18.

Dans la suite de la description, on fera référence à la soupape d'échappement 36, mais la description est transposable à la soupape d'admission 30.

La face inférieure 54 de la tête de la soupape 36 est inclinée par rapport à un plan horizontal de façon à être coplanaire avec la surface de chasse 52 lorsque la soupape 36 est en position d'obturation.

La queue de soupape 40 s'étend selon une direction qui n'est pas orthogonale à la face inférieure 54 de la tête de la soupape 36. La queue de soupape 40 s'étend ici verticalement vers le haut. Dans un plan vertical axial, l'axe A2 de la queue de soupape 40 forme donc un angle β avec la face inférieure 54 de la tête de la soupape 36. La mesure de l'angle β en degré est égale à 90° moins α.

Dans cette configuration, il est essentiel d'éviter que la soupape 36 ne tourne autour de l'axe A2 de la queue de soupape 40 associée pour que la soupape 36 puisse obturer efficacement le conduit associé 32 et pour éviter que, lorsque le piston 16 est en position haute, sa zone périphérique 48 ne heurte la soupape 36.

A cet effet le moteur comporte des moyens (non représentés) de blocage de la rotation de la soupape 36 ou de la queue de soupape 40 autour de son axe A2.

Le fonctionnement du moteur est similaire à celui qui a été décrit précédemment. La seule différence est que, pour produire le phénomène de chasse, une portion de la zone périphérique 48 du piston 16 coopère avec la face inférieure 54 de la tête de la soupape 36 au lieu de coopérer avec la surface de chasse 52. Les mouvements aérodynamiques obtenus sont similaires.

Dans cette variante, l'orientation des queues de soupape 40 est avantageusement indépendante de l'orientation de la face inférieure 54 de la tête de la soupape 36 en permettant ainsi une certaine liberté dans la conception du moteur, notamment en ce qui concerne l'agencement d'accessoires à proximité de la culasse 18.

## Revendications

1. Moteur à combustion interne à injection directe de véhicule automobile comportant au moins un cylindre (10) qui est coiffé d'une culasse supérieure (18) et dans lequel un piston (16) est monté coulissant axialement entre une position basse et une position haute dans laquelle la face supérieure (24) du piston (16) est adjacente à la face inférieure (20) de la culasse (18), et comportant une chambre de combustion (22) qui est délimitée latéralement par la paroi (12) du cylindre (10) et axialement vers le bas par la face supérieure (24) du piston (16) et vers le haut par la face inférieure (20) de la culasse (18), du type dans lequel la chambre de combustion (22) comporte une cavité centrale de combustion (44) qui est destinée à recevoir un mélange de gaz admis et de carburant, du type dans lequel la face inférieure (20) de la culasse (18) comporte une surface annulaire (52) dite de chasse qui est destinée à coopérer avec une zone (48) périphérique annulaire tronconique de la face supérieure (24) du piston (16) qui entoure la cavité centrale (44) afin que les gaz admis, qui sont situés entre la zone périphérique annulaire (48) et la surface annulaire de chasse (52), soient chassés radialement vers la cavité centrale de combustion (44) lorsque le piston (16) se déplace vers sa position haute,
**caractérisé en ce que** la cavité centrale de combustion (44) est réalisée dans la face supérieure (24) du piston (16), et **en ce que** la zone périphérique (48) de la face supérieure (24) du piston (16) est tronconique concave de manière à être inclinée vers la cavité centrale de combustion (44), et **en ce que** la surface de chasse (52) de la culasse (18) a une forme tronconique convexe complémentaire de la zone périphérique (48) du piston (16).

2. Moteur selon la revendication précédente, **caractérisé en ce qu'**il comporte au moins un conduit (26, 32) qui débouche dans la chambre de combustion (22) par l'intermédiaire d'un orifice (28, 34) réalisé dans la surface de chasse (52) qui est obturé par une soupape (30, 36).

3. Moteur selon la revendication précédente, **caractérisé en ce que** la face inférieure (54) de la tête de la soupape (30, 36) est coplanaire à la surface de chasse (52).

4. Moteur selon la revendication précédente, **caractérisé en ce que** la soupape (30, 36) comporte une queue de soupape (38, 40), **en ce que** l'axe (A2) de la queue de soupape (38, 40) n'est pas perpendiculaire à la face inférieure (54) de la soupape (38, 40), et **en ce qu'**il comporte des moyens de blocage en rotation de la queue de soupape (38, 40) autour de son axe (A2) par rapport à la culasse (18).

5. Moteur selon la revendication précédente, **caractérisé en ce que** l'axe (A2) de la queue de la soupape (38, 40) s'étend axialement vers le haut.

6. Moteur selon l'une quelconque des revendications précédentes, **caractérisé en ce que** la cavité centrale de combustion (44) est délimitée radialement par le contour interne (50) de la périphérie annulaire (48) de la face supérieure (24) du piston (16).

7. Moteur selon l'une quelconque des revendications 2 à 6, **caractérisé en ce que** l'orifice (28) est un orifice d'admission des gaz.

8. Moteur selon l'une quelconque des revendications 2 à 6, **caractérisé en ce que** l'orifice (34) est un orifice d'échappement des gaz brûlés.
